# FASCICULE DE BREVET EUROPEEN

(11) **EP 3 030 409 B1**
(45) Date de publication et mention de la délivrance du brevet: **07.08.2019**
(21) Numéro de dépôt: 14752919.2
(22) Date de dépôt: 26.06.2014
(51) Int. Cl.: B29D 30/06, B29C 33/30, B29C 33/42, B29D 30/72, B60C 13/00, B29K 105/00

(54) **MOULE POUR PNEUMATIQUE COMPORTANT UN INSERT ANNULAIRE EN PLUSIEURS PARTIES**
REIFENFORMWERKZEUG MIT EINEM MEHRTEILIGEN RINGFÖRMIGEN EINSATZ
TIRE MOULD COMPRISING A MULTIPLE-PART ANNULAR INSERT

(30) Priorité: 05.08.2013 FR 1301878
(43) Date de publication de la demande: 15.06.2016
(73) Titulaire: Compagnie Générale des Etablissements Michelin, 63000 Clermont-Ferrand (FR)
(72) Inventeur: VILLENEUVE, Bernard, F-63040 Clermont-Ferrand Cedex 9 (FR); GOMET, Christian, F-63040 Clermont-Ferrand Cedex 9 (FR)
(74) Mandataire: Demaure, Pierre-Yves
(86) Numéro de dépôt international: PCT/IB2014/001223
(87) Numéro de publication internationale: WO 2015/019137

(56) Documents cités:
- WO-A1-2009/007790
- DE-A1-102007 005 455
- DE-A1-102010 017 251
- US-A- 1 632 310
- US-A- 5 288 449
- US-A- 5 643 519
- US-A1- 2004 032 053
- US-A1- 2011 180 200

## Description

### DOMAINE TECHNIQUE DE L'INVENTION

La présente invention concerne les moules pour pneumatiques. Plus particulièrement, elle se rapporte au moulage des éléments de marquages sur les flancs de ces pneumatiques.

### ETAT DE LA TECHNIQUE ANTERIEURE

Il est connu que les flancs des pneumatiques comportent un grand nombre de marquages, tels que la marque du fabriquant, le type de pneumatique, les dimensions du pneumatique etc. Ces marquages sont obtenus en prévoyant sur le moule, et plus particulièrement sur des parties latérales de ce moule dites « coquilles », des moyens aptes à mouler ces marquages, appelés ci-après « moyens de marquage ».

Or, en fonction du type d'information que l'on souhaite faire apparaître sur le flanc du pneumatique, il peut être nécessaire de modifier régulièrement les marquages sur ce pneumatique.

Le document US4547139 divulgue l'utilisation de plaquettes amovibles placées dans une coquille d'un moule. Ces plaquettes comportent des moyens de marquage comprenant des indications qu'il faut changer régulièrement, comme par exemple la période de fabrication du pneumatique. Cependant, la taille de la plaquette étant relativement petite, la quantité d'information qu'elle peut contenir est limitée. En outre, la fixation de la plaquette dans le moule est complexe.

Le document JP61019314 divulgue l'utilisation d'un insert amovible se présentant sous la forme d'une pièce monobloc annulaire. Plus particulièrement, cet insert annulaire est logé dans une rainure s'étendant dans une coquille du moule. Cet insert présente alors un diamètre relativement important, ce qui nécessite une grande précision dans sa réalisation afin que celui-ci s'adapte de manière satisfaisante à la rainure, et ceci sur toute la circonférence de cette rainure.

Le document US1632310 divulgue un moule pour la vulcanisation et le moulage d'un pneumatique constitué d'une pluralité de sections interchangeables permettant de mouler le flanc ou une autre partie du pneumatique. Chaque section contient des cavités de moulage formant différentes lettres ou signes qui, lorsque les sections sont agencées d'une certaine manière, permettent le moulage d'une suite de motifs ayant une signification et permettant d'identifier les pneumatiques sur lesquels ils son moulés.

Le document WO 2009/007790 A1 divulgue un moule pour la vulcanisation et le moulage d'un pneumatique selon le préambule de la revendication 1.

**Il** existe donc un besoin de proposer une solution de remplacement de moyens de marquage à l'intérieur d'un moule qui permet de modifier une grande quantité d'informations de marquage, tout en étant plus simple et plus pratique à réaliser que dans l'art antérieur.

### EXPOSE DE L'INVENTION

Un premier objet de l'invention consiste à prévoir un moule spécifiquement adapté pour le moulage de pneumatiques dont le marquage des flancs est susceptible de changer ou d'évoluer.

Un autre objet de l'invention consiste à prévoir un moule pour pneumatique dont le marquage ou des motifs de flancs doivent être réalisés avec un très haut niveau de précision.

Pour ce faire, l'invention prévoit un moule selon la revendication 1, pour la vulcanisation et le moulage d'un pneumatique comprenant une bande de roulement délimitée par deux flancs. Le moule comprend une couronne destinée au moulage de la bande de roulement du pneumatique et deux coquilles distinctes de la couronne pour le moulage des flancs. Le moule comprend également une rainure annulaire s'étendant en creux dans une des coquilles et un insert logé dans la rainure. L'insert comporte des moyens de marquage du pneumatique et cet insert est formé de plusieurs parties d'insert positionnées les unes à la suite des autres dans la rainure annulaire.

L'invention propose ainsi de fabriquer un insert annulaire en plusieurs parties en vue de faciliter sa réalisation. En outre, comme chaque partie d'insert présente des dimensions limitées, leur ajustement à la rainure dans la coquille est facilité. De plus, en cas de modifications des marquages sur le flanc du pneumatique, seules les parties d'insert comprenant des moyens de marquage concernés par ces modifications sont remplacées. Il n'est donc pas nécessaire de remplacer l'ensemble de l'insert comme dans l'art antérieur.

Dans un mode de réalisation particulier, chaque partie d'insert ayant une surface de moulage apte à être en contact avec le pneumatique, au moins deux parties d'insert présentent des caractéristiques de surface de moulage différentes.

On peut ainsi adapter les caractéristiques de surface de moulage des parties d'insert en fonction des marquages que l'on veut imprimer sur le flanc. Par exemple, si le marquage fait protubérance par rapport au flanc, on peut améliorer le contraste entre le marquage et ce flanc en rendant plus rugueuse la surface du flanc. De la même manière, si le marquage est en creux dans le pneumatique, on peut améliorer le contraste en rendant plus lisse la surface du flanc.

Dans un autre mode de réalisation, au moins une partie d'insert est réalisée par frittage laser. Cette partie d'insert comporte tout ou partie des moyens de marquage de l'insert.

Le procédé du frittage laser est un procédé qui consiste à construire une pièce couche par couche en superposant successivement des couches de poudre et en fusionnant sélectivement cette poudre. Ce procédé peut être assisté par ordinateur ce qui permet de construire des pièces assez complexes. En utilisant ce procédé de frittage pour réaliser de parties d'insert, il est possible de former sur ces parties d'insert des moyens de marquage complexes permettant d'améliorer la visibilité du marquage sur un flanc de pneumatique.

Dans un autre mode de réalisation, au moins deux parties d'insert ont des dimensions différentes.

Ainsi, il est possible de réaliser des parties d'insert qui s'adaptent au mieux aux dimensions des marquages à imprimer sur le flanc du pneumatique. On rend alors beaucoup plus facile la réalisation de marquages différents à différents endroits sur le pneumatique.

Dans un autre mode de réalisation, chaque partie d'insert comporte des surfaces de contact servant à interfacer avec des parties d'insert adjacentes. Au moins deux parties d'insert sont reliées entre elles au niveau d'une zone de leur surface de contact, cette liaison étant apte à être brisée en vue de désolidariser les deux parties d'insert.

En liant tout ou partie des différentes parties d'insert entre elles, il est possible de positionner en une seule fois l'ensemble de l'insert annulaire dans le moule.

Lors d'une opération de changement d'une des parties d'insert, il suffit alors de briser les liaisons la retenant aux autres parties d'insert pour l'extraire du moule et la remplacer par une autre partie d'insert idoine.

Dans un autre mode de réalisation, le moule présentant un plan équatorial, une partie d'insert est décalée par rapport à une autre partie d'insert adjacente en direction du plan équatorial du moule.

De cette manière, on vient décaler certains moyens de marquage en direction du plan équatorial. Ces moyens de marquage plus proches du plan équatorial du moule vont alors permettre le moulage de marquages plus en creux dans le flanc du pneumatique. De ce fait, ces marquages vont mieux résister aux agressions que peut subir ce flanc, telles que les râpages trottoir. On améliore alors la pérennité des marquages du pneumatique.

Dans un autre mode de réalisation, la coquille comprend une ouverture traversante, comme par exemple un alésage, s'étendant entre l'insert et l'extérieur de la coquille. Ce type d'agencement permet d'introduire un moyen pour faire sortir la coquille lorsque celle-ci est fixée à force dans la rainure. En variante, plusieurs ouvertures ou alésages sont répartis le long de la circonférence de l'insert, par exemple un par partie d'insert.

### DESCRIPTION DES FIGURES

D'autres caractéristiques et avantages de l'invention ressortiront de la description suivante, donnée à titre d'exemple, sans caractère limitatif, en regard des dessins annexés sur lesquels :
- la figure 1 représente schématiquement une vue en coupe dans un plan méridien d'une partie d'un moule conforme à l'invention ;
- la figure 2 représente schématiquement une vue en perspective d'un insert annulaire adapté au moule de la figure 1 et réalisé selon un premier mode de réalisation de l'invention ;
- la figure 3 représente schématiquement une vue en perspective d'un insert annulaire adapté au moule de la figure 1 et réalisé selon un second mode de réalisation de l'invention ;
- la figure 4 représente schématiquement une face d'une partie d'insert de la figure 3 liée à une autre partie d'insert ;
- la figure 5 représente schématiquement une vue en perspective d'un insert annulaire adapté au moule de la figure 1 et réalisé selon un troisième mode de réalisation de l'invention ;
- la figure 6 représente schématiquement une vue en coupe dans un plan méridien d'une partie d'un moule conforme à l'invention montrant une ouverture permettant de conférer un accès à l'insert par l'extérieur du moule.

Dans la description qui va suivre, des éléments sensiblement identiques ou similaires seront désignés par des références identiques.

### DESCRIPTION DETAILLEE DE L'INVENTION

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « flanc» d'un pneumatique, on entend une surface latérale du pneumatique disposée entre la bande de roulement du pneumatique et un bourrelet de ce pneumatique.

Par « bourrelet» d'un pneumatique, on entend une partie du pneumatique destinée à prendre assise sur une jante de roue.

Par « moule », on entend un ensemble d'éléments de moule séparés qui, par rapprochement relatif, permettent de délimiter un espace de moulage toroïdal pour la vulcanisation et le moulage d'un pneumatique.

Par « plan équatorial », on entend un plan perpendiculaire à un axe de révolution du moule et séparant ce moule en deux 1/2 moules identiques.

Par « plan méridien », on entend un plan contenant l'axe de révolution du moule.

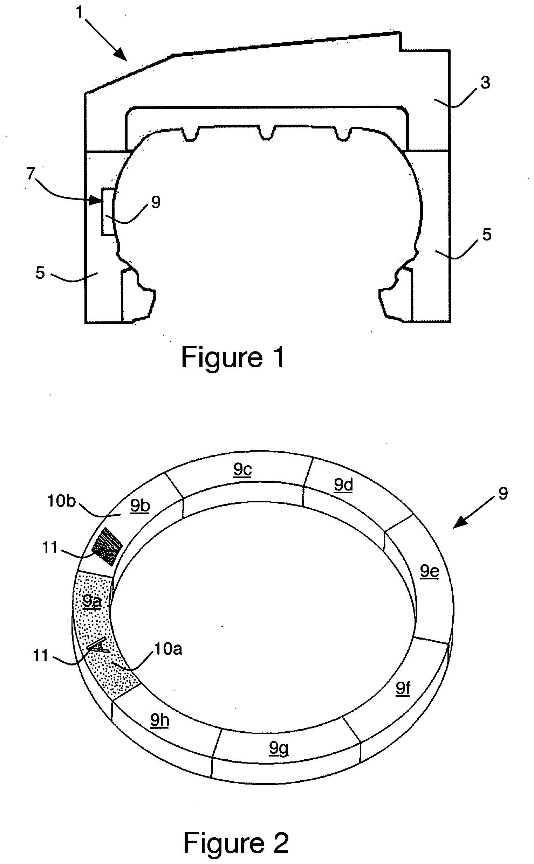

Comme on le voit à la figure 1, le moule 1 comprend une couronne 3 destinée au moulage de la bande de roulement d'un pneumatique et deux coquilles 5 pour le moulage des flancs. Le moule 1 comprend également une rainure annulaire 7 s'étendant le long de la circonférence du flanc, en creux dans une des coquilles 5. Un insert 9, est monté de façon amovible dans la rainure.

Tel que montré dans l'exemple de réalisation de la figure 2, l'insert 9 est formé de plusieurs parties d'insert 9a à 9h alignées angulairement les unes à la suite des autres de façon à former un anneau aux dimensions adaptées pour insertion dans la rainure annulaire 7. L'insert 9 comporte des éléments 11 de marquage du pneumatique. Ces éléments de marquage sont prévus à des fins d'identification des caractéristiques dimensionnelles du pneumatique, et/ou pour identifier le fabricant, et/ou pour agrémenter le flanc avec des motifs ou logos, etc. Chaque partie d'insert dispose d'une surface de moulage 10a, 10b, etc, apte à être en contact avec le pneumatique. L'agencement de l'insert en plusieurs parties permet, si besoin, de prévoir au moins deux parties d'insert avec des caractéristiques de surface de moulage différentes.

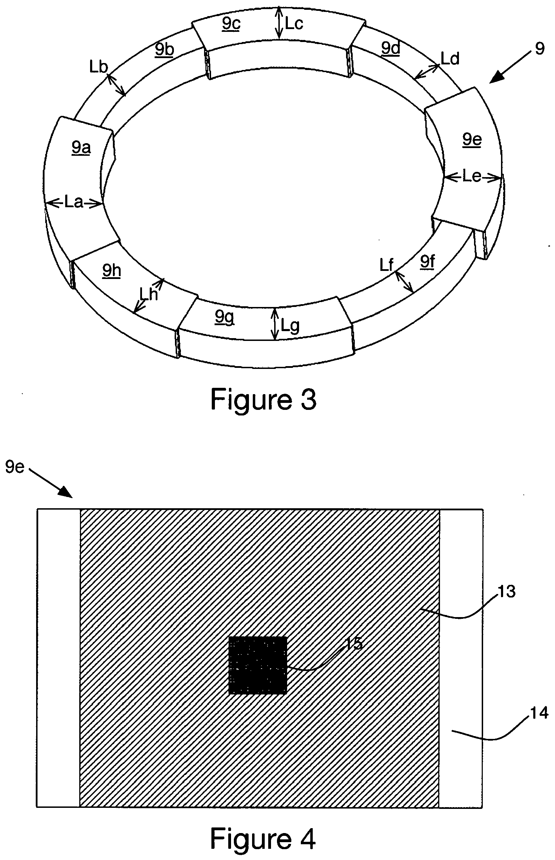

La figure 3 présente une variante de réalisation dans laquelle au moins deux parties d'insert ont des dimensions différentes. Par exemple, tel qu'illustré, la largeur L de l'insert varie par partie, avec dans cet exemple les évolutions de largeur comme suit : La>Lh>Lg>Lf. La largeur Lc est également plus importante que celle des deux sections adjacentes, de largeur Lb et Ld. Il en est de même pour la section 9e en regard des sections adjacentes 9d et 9f.

La figure 4 montre une vue en élévation d'une face latérale de la partie d'insert 9e, vu depuis la partie 9f. Puisque la largeur Le est supérieure à la largeur Lf, l'interface entre les deux sections 9e et 9f produit une zone de jonction avec une surface de contact 13 et une surface libre 14, de préférence de chaque côté de la surface de contact 13.

Un pont 15, ou élément de jonction, permet de fixer entre elles deux parties voisines de l'insert 9. Dans cet exemple, le pont 15 est prévu dans la zone centrale de surface de contact 13. En variantes, plusieurs ponts peuvent être prévus. Le profil et la surface des ponts peuvent varier selon les modes de réalisation. Les ponts sont avantageusement prévus lors de la fabrication de l'insert, en particulier dans le cas où l'insert est réalisé par frittage laser. Pour changer une partie d'insert, le ou les ponts reliant les parties concernées sont cassés ou coupés. La section des ponts est avantageusement prévue et dimensionnée pour faciliter cette opération. En effet, même si les parties sont séparables par cassure des ponts lorsque l'insert est hors du moule, le montage de l'insert dans le moule, de préférence avec serrage, confère une rigidité suffisante pour pouvoir effectuer les opérations de moulage sans risque de cassure de ponts. Par ailleurs, l'insertion de l'insert dans la rainure de coquille confère un appui solide permettant de bien résister aux efforts de moulage.

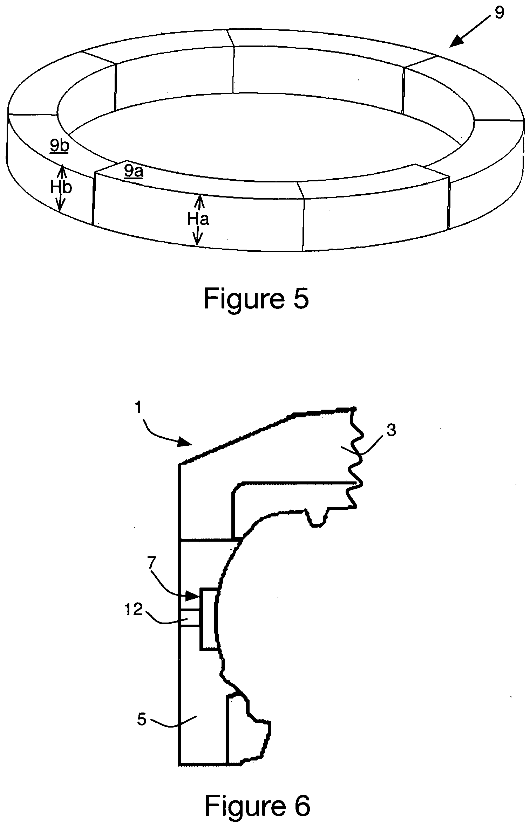

La figure 5 montre encore une autre variante de réalisation dans laquelle les hauteurs Ha et Hb d'au moins deux parties d'insert sont différentes. On retrouve ainsi les deux parties d'insert décalées l'une par rapport à l'autre en direction du plan équatorial du moule.

Dans la variante de réalisation présentée à la figure 6, un orifice traversant 12, tel qu'un alésage, assure une communication entre l'extérieur du moule et l'intérieur du moule. Cet orifice permet d'enfoncer un outil de démoulage depuis l'extérieur du moule pour faciliter l'extraction de l'insert, soit en totalité ou pour une ou plusieurs parties d'insert. Plusieurs orifices 12 peuvent être répartis angulairement le long de la circonférence de la coquille.

Les Figures et leurs descriptions faites ci-dessus illustrent l'invention plutôt qu'elles ne la limitent. En particulier, l'invention et ses différentes variantes viennent d'être décrites en relation avec un exemple particulier comportant huit parties d'insert.

Néanmoins, il est évident pour un homme du métier que l'invention peut être étendue à d'autres modes de réalisation dans lesquels en variantes, on prévoit un nombre différent de parties d'insert, par exemple entre 2 et 32 parties, et plus préférentiellement entre six et douze parties.

Les signes de références dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments.

## Revendications

1. Moule (1) pour la vulcanisation et le moulage d'un pneumatique, ce pneumatique comprenant une bande de roulement délimitée par deux flancs, le moule comprenant une couronne (3) destinée au moulage de la bande de roulement du pneumatique et deux coquilles (5) distinctes de la couronne pour le moulage des flancs, le moule comprenant une rainure annulaire (7) s'étendant en creux dans une des coquilles (5) et un insert (9) logé dans la rainure, cet insert (9) comportant des éléments de marquage (11) du pneumatique **caractérisé en ce que** l'insert (9) est formé de plusieurs parties d'insert (9a-9h) positionnées les unes à la suite des autres dans la rainure annulaire (7).

2. Moule selon la revendication 1, chaque partie d'insert ayant une surface de moulage (10a, 10b) apte à être en contact avec le pneumatique, **caractérisé en ce qu'**au moins deux parties d'insert présentent des caractéristiques de surface de moulage différentes.

3. Moule selon l'une quelconque des revendications 1 à 2, **caractérisé en ce que** la coquille (5) comprend une ouverture traversante (10) s'étendant entre l'insert (9) et l'extérieur de la coquille (5).

4. Moule selon l'une quelconque des revendications 1 à 3, chaque partie d'insert comportant des surfaces de contact (13) pour le contact avec des parties d'insert adjacentes, **caractérisé en ce qu'**au moins deux parties d'insert (9e, 9f) sont reliées entre elles au niveau d'une zone (15) de leur surface de contact, cette liaison étant apte à être brisée en vue de désolidariser les deux parties d'insert (9e, 9f).

## Patentansprüche

1. Form (1) zur Vulkanisierung und Formung eines Reifens, dieser Reifen umfassend einen Laufstreifen, der von zwei Flanken begrenzt wird, die Form umfassend eine Krone (3), die zur Formung des Laufstreifens des Reifens bestimmt ist, und zwei getrennte Schalen (5) der Krone zur Formung der Flanken, die Form umfassend eine ringförmige Rille (7), die sich vertieft in einer der Schalen (5) erstreckt, und einen Einsatz (9), der in der Rille aufgenommen ist, wobei dieser Einsatz (9) Markierungselemente (11) des Reifens aufweist, **dadurch gekennzeichnet, dass** der Einsatz (9) von mehreren Einsatzabschnitten (9a - 9h) gebildet ist, die einer nach dem anderen in der ringförmigen Rille (7) positioniert sind.

2. Form nach Anspruch 1, wobei jeder Einsatzabschnitt eine Formungsfläche (10a, 10b) aufweist, die geeignet ist, mit dem Reifen in Kontakt zu stehen, **dadurch gekennzeichnet, dass** mindestens zwei Einsatzabschnitte unterschiedliche Formungsflächeneigenschaften aufweisen.

3. Form nach einem der Ansprüche 1 bis 2, **dadurch gekennzeichnet, dass** die Schale (5) eine Durchgangsöffnung (10) umfasst, die sich zwischen dem Einsatz (9) und dem Äußeren der Schale (5) erstreckt.

4. Form nach einem der Ansprüche 1 bis 3, wobei jeder Einsatzabschnitt Kontaktflächen (13) für den Kontakt mit angrenzenden Einsatzabschnitten aufweist, **dadurch gekennzeichnet, dass** mindestens zwei Einsatzabschnitte (9e, 9f) an einem Bereich (15) ihrer Kontaktfläche miteinander verbunden sind, wobei diese Verbindung geeignet ist, gebrochen zu werden, um die zwei Einsatzabschnitte (9e, 9f) zu trennen.

## Claims

1. Mould (1) for vulcanizing and moulding a tyre, this tyre comprising a tread delimited by two sidewalls, the mould comprising a ring (3) intended for moulding the tread of the tyre and two shells (5), separate from the ring, for moulding the sidewalls, the mould comprising an annular groove (7) extending in a recessed manner in one of the shells (5) and an insert (9) housed in the groove, this insert (9) having tyre marking elements (11), **characterized in that** the insert (9) is formed from a plurality of insert parts (9a-9h) that are positioned one after another in the annular groove (7).

2. Mould according to Claim 1, wherein each insert part has a moulding surface (10a, 10b) able to be in contact with the tyre, **characterized in that** at least two insert parts have different moulding surface features.

3. Mould according to any one of Claims 1 to 2, **characterized in that** the shell (5) comprises a through-opening (10) extending between the insert (9) and the outside of the shell (5).

4. Mould according to any one of Claims 1 to 3, wherein each insert part has contact surfaces (13) for contact with adjacent insert parts, **characterized in that** at least two insert parts (9e, 9f) are connected together in a region (15) of their contact surface, this connection being able to be broken in order to separate the two insert parts (9e, 9f).
